(19) Europäisches Patentamt
European Patent Office
Office européen des brevets

(11) **EP 3 168 488 B1**

(12) **EUROPEAN PATENT SPECIFICATION**

(45) Date of publication and mention
of the grant of the patent:
**14.11.2018 Bulletin 2018/46**

(51) Int Cl.:
**F16C 32/04** (2006.01)

(21) Application number: **15838121.0**

(86) International application number:
**PCT/JP2015/004413**

(22) Date of filing: **31.08.2015**

(87) International publication number:
**WO 2016/035319 (10.03.2016 Gazette 2016/10)**

(54) **MAGNETIC BEARING AND METHOD TO BUILD CONTROL MODELS FOR MAGNETIC BEARINGS**

MAGNETLAGER UND VERFAHREN ZUM BAU VON STEUERMODELLEN FÜR MAGNETISCHE LAGER

PALIER MAGNÉTIQUE ET PROCÉDÉ DE CONSTRUCTION DE MODÈLES DE COMMANDE POUR PALIERS MAGNÉTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2014 JP 2014176921**

(43) Date of publication of application:
**17.05.2017 Bulletin 2017/20**

(73) Proprietor: **Daikin Industries, Ltd.**
**Osaka-shi, Osaka 530-8323 (JP)**

(72) Inventor: **SAKAWAKI, Atsushi**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- 2001 339 979    JP-A- 2002 310 152**
**JP-A- 2003 056 489    JP-A- 2013 068 309**

**Description**

TECHNICAL FIELD

This invention relates to a magnetic bearing supporting a drive shaft with no contact between the magnetic bearing and the drive shaft, and a method to build a control model for the magnetic bearing.

BACKGROUND ART

Employing magnetic bearings as a bearing in a drive shaft of, for instance, a compressor is known in the art (see, e.g., Patent Document 1). Patent Document 1 provides an example of an axial magnetic bearing including a rotating member (drive shaft), a tab axially aligned with the drive shaft, a C-shaped member arranged so as to enclose the tab, a permanent magnet installed in a center of the C-shaped member such that a north pole of the permanent magnet faces a radial end face of the tab, and a coil arranged in the C-shaped member. In this magnetic bearing, the drive shaft is supported with no contact between the magnetic bearing and the drive shaft by means of appropriately adjusting a current flowing through the coil thereby adjusting an axial magnetic force exerted on the rotating member.

Generally, in order to perform position control of a drive shaft in a magnetic bearing, it is required to model a correlation between an electromagnetic force of an electromagnet, a current, and a gap width (described below) for a control region. Therefore, when the magnetic bearing is designed and developed, oftentimes a device is provided to measure the electromagnetic force of the electromagnet regarding various current values and the gap width, the correlation is modeled based on results of this measurement, and this model is integrated in form of a function or a table into a microcomputer, or another computing device, which controls the magnetic bearing.

CITATION LIST

PATENT DOCUMENTS

PATENT DOCUMENT 1: Japanese Unexamined Patent Publication No. H10-501326.

JP 2013 068309 A discloses a magnetic bearing comprising: a stator having a plurality of electromagnets which apply electromagnetic force to a drive shaft; a calculator determining, based on a control model for a first control region, a value of a dependent variable of the electromagnets controlled within the first control region.

SUMMARY OF THE INVENTION

TECHNICAL PROBLEM

In order to be able to handle a high load, there is a demand for retaining a comparatively wide control region in a magnetic bearing, which requires the measuring device to feature a corresponding measuring range.

However, the wider a measuring range a measuring device has, the more expensive the device becomes, and, in some cases, measurement becomes less precise. Moreover, it is cumbersome and complicated to measure every single electromagnetic force occurring in an entire control region using a measuring device.

In view of the foregoing problem, the present invention attempts to provide a method allowing for building a control model for an electromagnet of a magnetic bearing without using an electromagnetic force measuring device, which has a measuring range corresponding to the control range of the magnetic bearing.

SOLUTION TO THE PROBLEM

To solve the above problem, a first aspect relates to a magnetic bearing including:

a stator (21) having a plurality of electromagnets (27) which apply electromagnetic force to a drive shaft (13); a calculator (41) determining, based on a control model for a first control region (A1), a value of a dependent variable of the electromagnets (27) controlled within the first control region (A1), and calculating a value of a dependent variable of the electromagnets (27) controlled within a second control region (A2), in a state where position control of the drive shaft (13) is performed by controlling part of the electromagnets (27) based on the control model for the first control region (A1), which is a control model built in advance for determining, based on a correlation between two or more parameters among a current (i) flowing through the electromagnets (27), the number of flux linkages ($\psi$) passing through the electromagnets (27), a gap width (G) between the stator (21) and the drive shaft (13), magnetic energy (Wm) of the electromagnets (27), magnetic co-energy (Wm') in the electromagnets (27), electromagnetic force generated by the electromagnets (27), and a parameter calculated based on these parameters, a value of a dependent variable related to this correlation, and by controlling, within the second control region (A2), one or a group of the electromagnets (27) other than the electromagnets (27) controlled within the first control region (A1); and

a control model building unit (40) building the control model used for the second control region (A2) based on the value calculated by the calculator (41).

In this configuration, the control model for the first control region (A1) built in advance is used to determine the value of the dependent variable regarding the electromagnets (27) controlled within the second control region (A2). In this way, a control model used for the second control region (A2) is built.

A second aspect is an embodiment of the first aspect, wherein
the correlation may be a correlation between the current (i) flowing through the electromagnets (27), the gap width (G), and the electromagnetic force, and
the calculator (41) may determine, based on the control model for the first control region (A1), a resultant force including electromagnetic forces generated by the electromagnets (27) controlled within the first control region (A1), and may calculate, based on the resultant force, the electromagnetic force of the electromagnets (27) controlled within the second control region (A2), in a state where the position control of the drive shaft (13) is performed by controlling part of the electromagnets (27) based on the control model for the first control region (A1), which is a control model build in advance based on the current (i) flowing through the electromagnets (27), the gap width (G), and the electromagnetic force, and by controlling, within the second control region (A2), one or a group of electromagnets (27) other than the electromagnets (27) controlled within the first control region (A1).

In this configuration, the electromagnetic force of the electromagnets (27) controlled within the second control region (A2) is determined using the control model for the first control area (A1) built in advance. In this way, the control model used for the second control region (A2) is built.

Further, in a third aspect, which is an embodiment of the second aspect,
the calculator (41) may determine in advance an electromagnetic force based on the control model of the first control region (A1) in a case where the drive shaft (13) is levitated at low load, using only the electromagnets (27) controlled in the first control region (A1), and then may determine a difference between the electromagnetic force previously calculated and the resultant electromagnetic force as an electromagnetic force generated by the electromagnets (27) controlled in the second control region (A2).

In this configuration, the electromagnetic force at low load is determined in advance, and this value is used to determine the electromagnetic force for the second control region (A2).

Moreover, in a fourth aspect, which is an embodiment of the second or third aspect,
the calculator (41) may determine, based on the control model for the second control region (A2), the electromagnetic force of the electromagnets (27) controlled within the second control region (A2), and may calculate, based on the electromagnetic force determined, an electromagnetic force of the electromagnets (27) controlled within a third control region (A3), in which electromagnetic force is stronger than in the second control region (A2), in a state where the position control is performed by controlling part of the electromagnets (27) in the third control region (A3), and predetermined other part of the electromagnets (27) within the second control region (A2), and
the control model building unit (40) may build a control model used for the third control region (A3) based on calculation results for the electromagnetic force of the electromagnets (27) controlled within the third control region (A3).

In this configuration, in the second control region (A2), in which the electromagnets have become controllable due to building the control model, the electromagnets (27) are operated, and, based on their electromagnetic force, the electromagnetic force of the electromagnets (27) controlled within the third control region (A3) is determined. In this way, the control model used for the third control region (A3) is built.

Furthermore, in a fifth aspect, which is an embodiment of the first aspect,
the correlation may be a correlation between the number of flux linkages ($\psi$), the gap width (G), and the electromagnetic force, and
the calculator (41) may determine, based on the control model for the first control region (A1), the resultant force including electromagnetic forces of the electromagnets (27) controlled within the first control region (A1), and may calculate, based on this resultant force, an electromagnetic force of the electromagnets (27) controlled within the second control region (A2), in a state where the position control of the drive shaft (13) is performed by controlling part of the electromagnets (27) based on the control model for the first control region (A1), which is a control model build in advance based on the number of flux linkages ($\psi$), the gap width (G), and the electromagnetic force, and by controlling, within the second control region (A2), one or a group of electromagnets (27) other than the electromagnets (27) controlled within the first control region (A1).

In this configuration, the control model is build based on the correlation between the number of flux linkages ($\psi$), the gap width (G), and the electromagnetic force.

In a sixth aspect, which is an embodiment of the fifth aspect,
the calculator (41) may determine the number of flux linkages ($\psi$) based on a value obtained by temporally integrating a voltage applied to the coil (25) of the electromagnets (27).

Further, in a seventh aspect, which is an embodiment of the fifth aspect,
the calculator (41) may determine the number of flux linkages ($\psi$) based on a value obtained by temporally integrating a voltage resulting from deducting a voltage drop of the coil (25) from a voltage applied to the coil (25) of the electromagnets (27).

In an eighth aspect, which is an embodiment any one of the first to seventh aspects,
a core (22), which is the stator (21), may be formed by combining a plurality of core blocks (22a).

In this configuration, dividing the core (22) into the core blocks (22a) allows for employing a variety of techniques for, for example, winding the coil.

A ninth aspect relates to a control model building method for a magnetic bearing, which includes a plurality of electromagnets (27) and performs position control of a drive shaft (13), the control model building method including:

preparing a control model for determining a value of a dependent variable based on a correlation between two or more parameters among a current (i) flowing through the electromagnets (27), the number of flux linkages ($\psi$) passing through the electromagnets (27), a gap width (G) between a stator (21) and a drive shaft (13), magnetic energy (Wm) of the electromagnets (27), magnetic co-energy (Wm') in the electromagnets (27), electromagnetic force generated by the electromagnets (27), and a parameter calculated based on these parameters, the dependent variable being related to the correlation,

performing the position control by operating part of the electromagnets (27) within a second control region (A2), a control model for which yet needs to be built, and by controlling other predetermined part of the electromagnets (27) within a first control region (A1),

first determining a value of a dependent variable regarding the electromagnets (27) controlled within the first control region (A1) based on a control model for the first control region (A1),

second determining a value of a dependent variable regarding the electromagnets (27) operated within the second control region (A2) based on the value of the dependent variable determined in the first determining, and

building a control model used for the second control region (A2) based on the value of the dependent variable determined in the second determining.

In this configuration, the control model used for the first control region (A1), which has been built in advance, is used to determine the value of the dependent variable regarding the electromagnets (27) controlled within the second control region (A2). In this way, the control model used for the second control region (A2) is built.

ADVANTAGES OF THE INVENTION

The first and second aspects make it possible to build a control model for an electromagnet of a magnetic bearing without using an electromagnetic force measuring device, which has a measuring range corresponding to the control range of the magnetic bearing.

According to the third aspect, the electromagnetic force in the second control region (A2) may be determined more accurately.

Further, according to the fourth aspect, the control region may be extended.

Moreover, the fifth aspect the position control in the magnetic bearing may be possible even in a region (e.g., in a saturated region, which will be described later) with a large individual difference between the electromagnetic forces.

Furthermore, in the sixth and sevenths aspects, the number of flux linkages may be calculated.

According to the eighth aspect, production of the stator (e.g., coil winding) may be simplified.

Moreover, according to the ninth aspect, it is possible to build a control model for an electromagnet of a magnetic bearing without using an electromagnetic force measuring device, which has a measuring range corresponding to the control range of the magnetic bearing.

BRIEF DESCRIPTION OF THE DRAWINGS

[FIG. 1] FIG. 1 is a schematic view showing a configuration of a turbo-compressor of a first embodiment.
[FIG. 2] FIG. 2 is a cross-sectional view of a magnetic bearing of the first embodiment.
[FIG. 3] FIG. 3 shows forces exerted on a drive shaft by each of electromagnets.
[FIG. 4] FIG. 4 is a block diagram of a controller and a control model building unit of the first embodiment.

[FIG. 5] FIG. 5 is a flowchart showing how a control model is built.

[FIG. 6] FIG. 6 illustrates an example relationship between electromagnetic forces of each of the electromagnets when a control model is built.

[FIG. 7] FIG. 7 shows electromagnetic forces of a magnetic bearing of a second embodiment.

[FIG. 8] FIG. 8 shows a correlation between an intensity of a current and a magnetic flux of an electromagnet.

[FIG. 9] FIG. 9 shows a relationship between a current and an electromagnetic force.

[FIG. 10] FIG. 10 illustrates an example border between a saturated region and an unsaturated region with current and gap width used as parameters.

[FIG. 11] FIG. 11 shows an example division of a core.

## DESCRIPTION OF EMBODIMENTS

In the following, embodiments of the present invention are described with reference to the drawings. Note that the following embodiments are beneficial examples in nature, and are not intended to narrow the scope, applications, or use of the present invention.

«First Embodiment of Invention»

In the scope of a first embodiment of the present invention, a turbo-compressor, in which a magnetic bearing is employed, will be explained. This turbo-compressor is connected to a refrigerant circuit (not shown) performing a refrigeration cycle operation by circulating a refrigerant, and compresses the refrigerant.

<Overall Configuration>

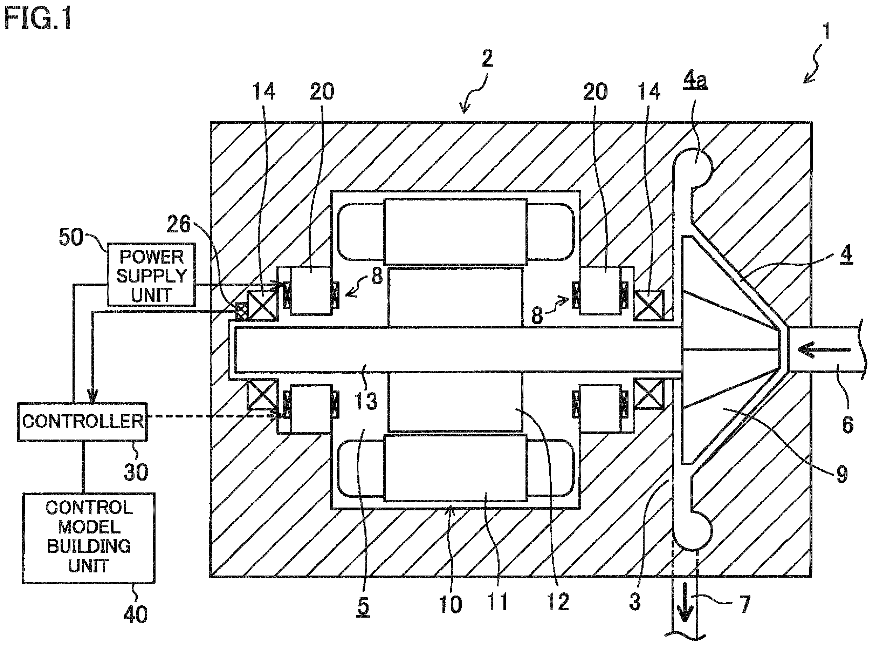

FIG. 1 is a schematic view showing a structure of the turbo-compressor (1). This turbo-compressor (1) includes a casing (2), a bearing mechanism (8), an impeller (9), and an electric motor (10).

The casing (2) has the shape of a cylinder having both ends closed and is positioned such that an axis line of the cylinder is horizontally oriented. A space in the casing (2) is partitioned by a wall (3). A space to the right of the wall (3) is an impeller chamber (4) housing the impeller (9), whereas a space to the left of the wall (3) houses the electric motor (10). A compression space (4a) communicating with the impeller chamber (4) is formed at an outer circumferential side of the impeller chamber (4). An intake pipe (6) for introducing the refrigerant of the refrigerant circuit into the impeller chamber (4), and a discharge pipe (7) for returning the high-pressure refrigerant compressed in the impeller chamber (4) to the refrigerant circuit, are connected to the casing (2).

The impeller (9) includes a plurality of blades which are arranged such that the impeller (9) has a substantially conical outer shape. The impeller (9) is housed in the impeller chamber (4) while fixed to an end of a drive shaft (13) of the electric motor (10).

The electric motor (10) is accommodated in the casing (2) and drives the impeller (9). This electric motor (10) includes a stator (11), a rotor (12), and the drive shaft (13). For example an interior permanent magnet motor (i.e., an IPM motor) is employed as the electric motor (10). The drive shaft (13) is arranged horizontally inside the casing (2) and fixed to the rotor (12).

The bearing mechanism (8) includes two touchdown bearings (14, 14) and two magnetic bearings (20, 20). The touchdown bearings (14) and the magnetic bearings (20) are for supporting the drive shaft (13) in a radial direction. Note that the electric motor (8) may also include a touchdown bearing (14) supporting the drive shaft (13) in a thrust direction.

The touchdown bearings (14) and the magnetic bearings (20) are both fixed in the casing (2). The two magnetic bearings (20) are arranged one at each end of the drive shaft (13) so as to support both a left end and a right end of the drive shaft (13). The touchdown bearings (14) are arranged further remote from a center of the drive shaft (13) than the magnetic bearings (20, 20) such that each of the touchdown bearings (14) supports one of the both ends of the drive shaft (13).

The touchdown bearings (14) may be, for example, ball bearings. When the magnetic bearing (20) is not operating, the touchdown bearings (14) support the drive shaft (13) such that the drive shaft (13) does not come in contact with the magnetic bearing (20). Note that the touchdown bearings (14) are not limited to ball bearings.

<Configuration of Magnetic Bearing (20)>

The magnetic bearing (20) includes a plurality of electromagnets (27). The magnetic bearing (20) supports the drive shaft (13) with no contact between the magnetic bearing (20) and the drive shaft (13) by exerting a combination of electromagnetic forces (resultant electromagnetic force) generated by each of the electromagnets (27) on the drive shaft (13).

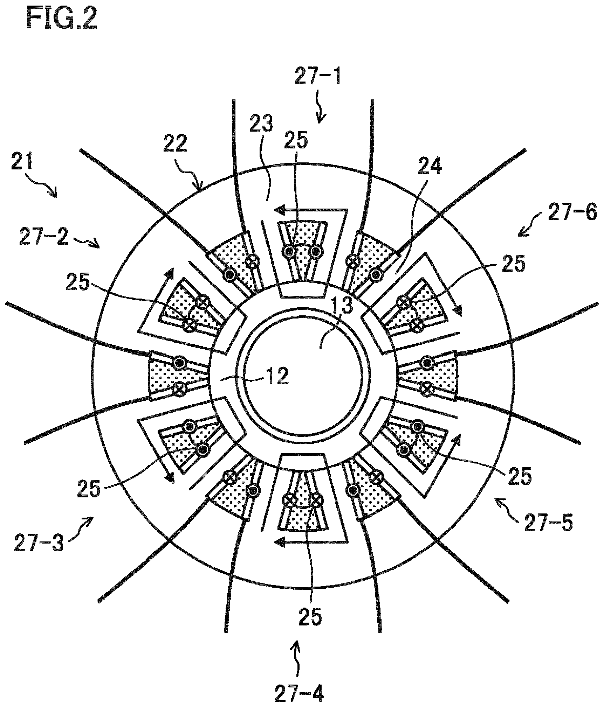

FIG. 2 is a cross-sectional view of the magnetic bearing (20) of the first embodiment. As shown in FIGS. 1 and 2, the magnetic bearing (20) is a so-called heteropolar radial bearing. The magnetic bearing (20) includes a stator (21), a gap sensor (26), the electromagnets (27), a controller (30), a control model building unit (40), and a power supply unit (50).

-Gap Sensor (26)-

The gap sensor (26) is attached to the casing (2) and detects a distance (gap width (G)) of the drive shaft (13) to the magnetic bearing (20) in a radial direction.

-Stator (21)-

The stator (21) includes a core (22) and coils (25). The core (22) includes electromagnetic steel plates which are stacked one on top of another, and has a back yoke (23) and a plurality of teeth (24). The back yoke (23) is a member having a substantially tubular shape in the stator (21). The teeth (24) are members protruding from an inner circumferential surface of the back yoke (23) in an inward radial direction. In this example, the core (22) has twelve teeth (24). The teeth (24) are arranged along an inner circumference of the back yoke (23) and are equally spaced (pitch: 30 degrees).

In the stator (21), the coils (25) are wound one each around adjacent pairs of teeth (24). One pair of teeth (24, 24) and one coil (25) form together one electromagnet (27). More specifically, the stator (21) includes six electromagnets (27). The power supply unit (50) is connected to, and supplies power to, each of the coils (25). Note that, in order to distinguish between the electromagnets (27), in FIG. 2 each of the electromagnets (27) is identified by a reference character followed by a hyphen and a number from one to six (e.g., 27-1, 27-2 ...).

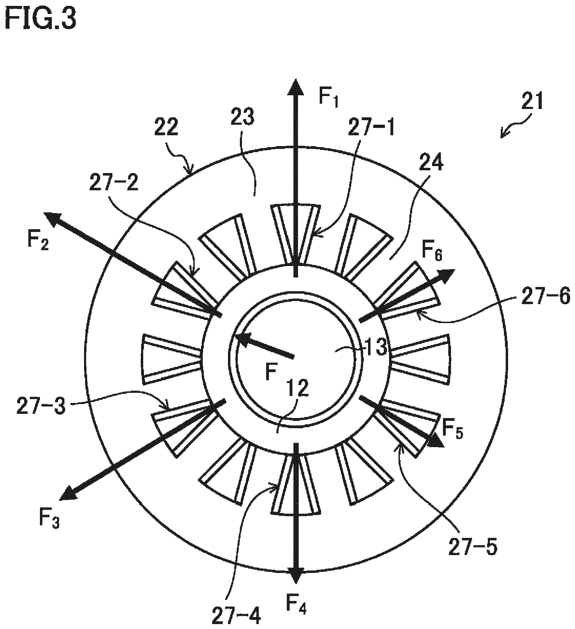

FIG. 3 shows forces exerted on the drive shaft (13) by each of the electromagnets (27). As shown in FIG. 3, in the magnetic bearing (20), a supporting force (F), which is a combination of forces (F1, F2, F3, F4, F5, F6) generated by each of the six electromagnets (27-1) to (27-6), levitates the drive shaft (13). In other words, in the magnetic bearing (20), position control (also referred to as levitation control) of the drive shaft (13) is performed by the six electromagnets (27-1) to (27-6).

-Power Supply Unit (50)-

The power supply unit (50) supplies power to each of the coils (25). This power supply unit (50) is capable of individually controlling voltage applied to each of the coils (25). Since the magnetic bearing (20) includes six coils (25), the power supply unit (50) has six outputs. The voltage the power supply unit (50) supplies to each of the coils (25) is controlled by the controller (30). Specifically, the power supply unit (50) changes its output voltage based on a voltage command value (V*) output by the controller (30). As a result, a current (i) flowing through each of the coils (25) may be modified. The power supply unit (50) may be, for example, a pulse width modulation (PWM) amplifier regulating the voltage by PWM control. Note that the power supply unit (50) of the present embodiment allows both a forward and a reverse current flow.

-Controller (30)-

The controller (30) includes a microcomputer, and a memory device (which may be an internal memory device of the microcomputer) storing a program which operates the microcomputer (omitted in the drawings). In the magnetic bearing (20), a control model regarding some of control areas (for convenience of description hereinafter referred to as a control model already known) is integrated in advance into the controller (30). As described in detail below, the control model building unit (40) uses the control model already known to build control models for the remaining control areas. Note that the term "control model" as used herein refers to a correlation between the current flowing through the electromagnets (27), the gap width (G) between the stator (21) and the drive shaft (13), and the electromagnetic force generated by the electromagnets (27). Specifically, the correlation is shown in form of a function in the program or a table stored in the memory device. In preparation of the "control model known in advance," the electromagnetic force of each of the electromagnets (27) may be measured with a measuring device during, for instance, a stage when the magnetic bearing is designed and developed. The "control model known in advance" may then be built using these measurement results. The control model prepared is integrated into the controller (30) in advance (during construction or installation of the magnetic bearing).

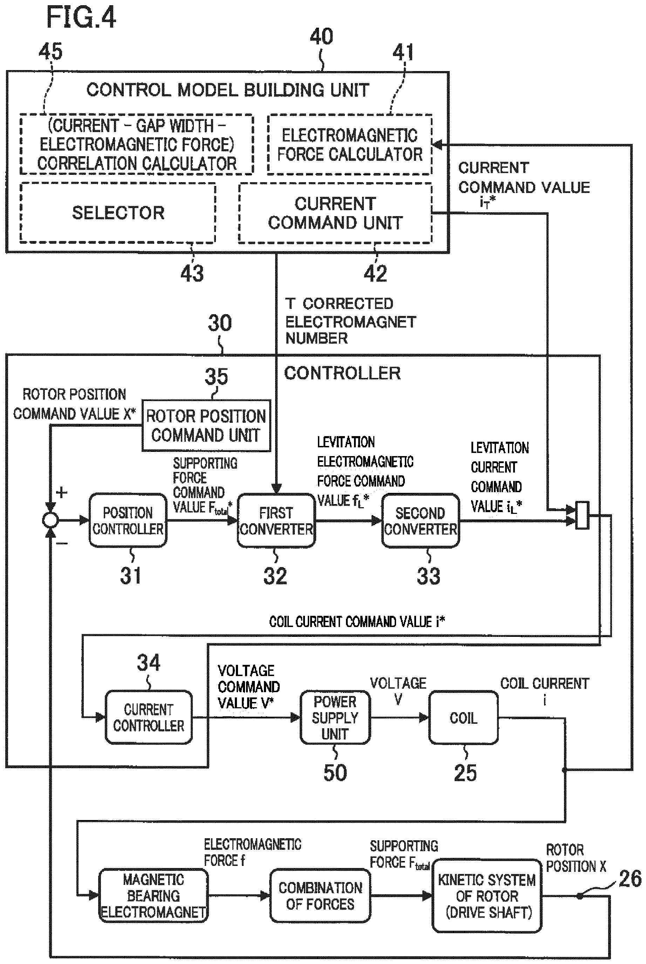

FIG. 4 is a block diagram of the controller (30) and the control model building unit (40) of the first embodiment. As shown in FIG. 4, the controller (30) includes a position controller (31), a first converter (32), a second converter (33), a current controller (34), and a rotor position command unit (35).

The rotor position command unit (35) generates a command value (rotor position command value (X*)) for the position of the drive shaft (13) in the radial direction. During normal operation, the rotor position command unit (35) generates the rotor position command value (X*) for controlling the position of the drive shaft (13). When a control model, which will be described later, is built, the rotor position command unit (35) appropriately generates the rotor position command value (X*) within a range required for building the control model.

The position controller (31) outputs, to the first converter (32), a command value (supporting force command value ($F_{total}$*)) indicating a supporting force for levitating the drive shaft (13), depending on a deviation of a target position of the drive shaft (13) in the radial direction (i.e., the rotor position command value (X*)) from an actual position of the drive shaft (13) in the radial direction detected by the gap sensor (26). Note that the supporting force is a resultant force of the electromagnetic forces of all of the electromagnets (27).

Based on the supporting force command value ($F_{total}$*), the first converter (32) calculates the electromagnetic force each of the electromagnets (27) is required to generate (in the following referred to as levitation electromagnetic force ($f_L$)). Regarding each of the electromagnets (27), the first converter (32) outputs, to the second converter (33), a command value indicating the levitation electromagnetic force ($f_L$) (levitation electromagnetic force command value ($f_L$*)).

Note that, when the control model is built, an electromagnet number (T) is entered by a selector (43) into the first converter (32). In this case, the first converter (32) outputs, to the second converter (33), the levitation electromagnetic force command value ($f_L$*) regarding the electromagnets (27) apart from the electromagnet (referred to as electromagnet for building the control model) identified with the electromagnet number (T) entered into the first converter (32).

Based on the levitation electromagnetic force command value ($f_L$*), the second converter (33) generates, and outputs to the current controller (34), a command value (levitation current command value ($i_L$*)) regarding a current (referred to as levitation current (iL)) flowing through the coil (25) of each of the electromagnets (27). Note that, when the control model is built, the second converter (33) outputs the levitation current command value ($i_L$*) with regard to the electromagnets (27) apart from the electromagnet for building the control model. The second converter (33) uses the "control model already known," which is stored in the controller (30), to determine the levitation current command value ($i_L$*) in this case.

Current command values (coil current command values (i*)) corresponding to each of the electromagnets (27) are entered into the current controller (34). The current controller (34) generates, and outputs to the power supply unit (50), a voltage command value (V*), such that a voltage based on each of the coil current command values (i*) flows through each of the coils (25). Specifically, during normal operation, the levitation current command value ($i_L$*) corresponding to all electromagnets (27) is entered into the current controller (34). Further, when the control model is built, the levitation current command value ($i_L$*) corresponding to levitating electromagnets (which will be described later) as well as a current command value ($i_T$*) corresponding to the electromagnet for building the control model are entered into the current controller (34).

This allows the current controller (34) to generate the voltage command value (V*) during normal operation, such that a current based on the levitation current command value ($i_L$*) flows through the coil (25) of each of the electromagnets (27). On the other hand, when the control model is built, the current controller (34) generates the voltage command value (V*) such that, with respect to the levitating electromagnets, a current based on the levitation current command value ($i_L$*) flows through each of the coils (25), and, with respect to the magnet for building the control model, a current based on the current command value ($i_T$*) flows through each of the coils (25).

-Control Model Building Unit (40)-

The control model building unit (40) includes a microcomputer, and a memory device (which may be an internal memory device of the microcomputer) storing a program operating the microcomputer (omitted in the drawings). The control model building unit (40) may share this microcomputer and the memory device with the controller (30), or be provided with a separate microcomputer and memory device.

The control model building unit (40) of the present embodiment builds a control model for a control region (hereinafter referred to as a second control region (A2)) other than a control region (hereinafter referred to as a first control region (A1)), which is controllable using the "control model already known," among control regions in the magnetic bearing (20) in which position control needs to be performed. Specifically, the control model building unit (40) constructs a function or a table showing the relationship between the current, gap width, and electromagnetic force. Note that, when building the control models, the control model building unit (40) selects the electromagnets (27) one by one and builds a control model with respect to the electromagnet (27) selected. The control models built for the second control region (A2) are stored in the controller (30), and used when the second converter (33) generates the levitation current command value ($i_L$*).

As shown in FIG. 4, the control model building unit (40) of the present embodiment includes an electromagnetic force calculator (41), a current command unit (42), the selector (43), and a correlation calculator (45).

The selector (43) selects one of the electromagnets (27) for building the control model, and outputs, to the first converter (32), the magnet number (T) indicating the electromagnet (27) selected.

The current command unit (42) generates a command value (current command value ($i_T$*)) for current flowing through the coil (25) of the electromagnet (27) used to build the control model, and outputs the command value to the current controller (34). Note that the current command unit (42) sets the current command value ($i_T$*) such that the magnetic flux of the electromagnet (27) used to build the control model falls within the second control region (A2).

The electromagnetic force calculator (41) calculates electromagnetic force generated by the electromagnets (27) when the control model is built. To calculate the electromagnetic force, a current value of the coil (25) of each of the electromagnets (27) is entered into the electromagnetic force calculator (41). Note that a calculation method of the electromagnetic force will be described in detail later.

Based on calculation results provided by the electromagnetic force calculator (41), the correlation calculator (45) constructs, in form of a function or a table, a correlation curve of the current, electromagnetic force, and gap width (G) of the electromagnets (27) in the second control region (A2). Note that, by altering the position of the drive shaft (13) via the rotor position command unit (35), the correlation calculator (45) constructs a correlation curve for building the control model for the second control region (A2), such that the correlation curve may correspond to a gap width (G) of a desired scope.

<Building of Control Model>

In the electromagnetic bearing (20) of the present embodiment, building the control model for the second control region (A2) is performed by, for instance, an instruction given by a user (e.g., manipulation of a control panel by the user), or by program control. Note that program control may include building the control model when, for instance, the magnetic bearing (20) is started up or shut down, or at a time indicated by a timer.

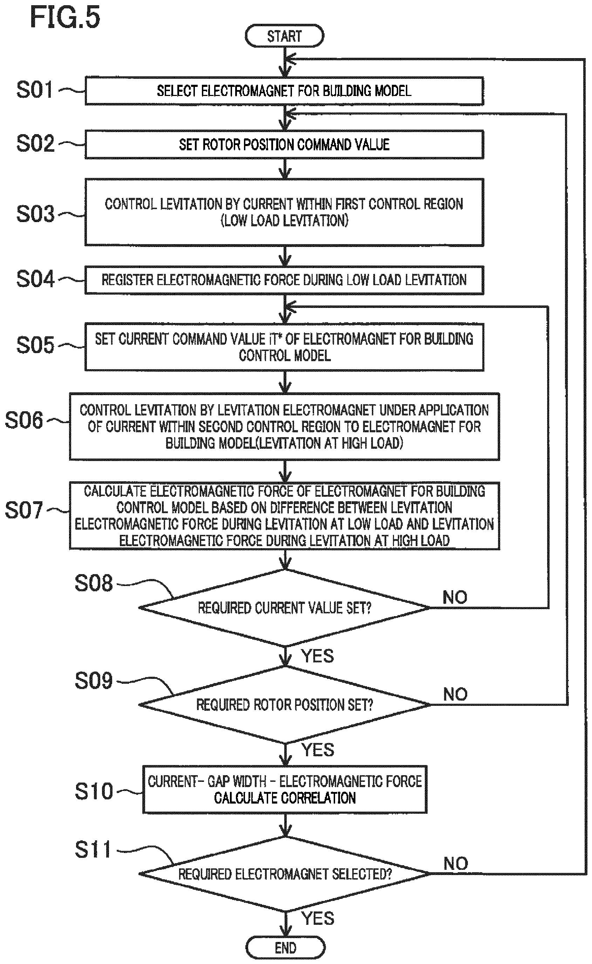

FIG. 5 is flowchart showing how the control model is built according to the first embodiment. As shown in FIG. 5, the controller (30) and the control model building unit (40) perform process steps from step (S01) to step (S11).

In step (S01), the selector (43) selects the electromagnet (27) for building the control model and outputs the electromagnet number (T) indicating the electromagnet (27) selected to the first converter (32). This example explains a process where, first, an electromagnet (corresponding to the electromagnet (27-1) in FIG. 2 and other figures) designated by the electromagnet number T = 1 is selected.

In step (S02), the rotor position command unit (35) selects a gap width (G) required for building the model, generates the rotor position command value (X*) corresponding to the value of the gap width (G), and outputs the rotor position command value (X*) to the position controller (31).

In step (S03), the drive shaft (13) is levitated with the current, which flows to the electromagnet (27-1) for building the control model, controlled within the first control region (A1) and with the current, which is controlled within the first control region (A1), allowed to flow through each of the coils (25) of the other electromagnets (hereinafter referred to as levitation electromagnets). In this example, the electromagnets (27-2) to (27-6), i.e., the electromagnets other than the electromagnet (27-1) corresponding to the electromagnet number T = 1, are levitation electromagnets. Next, the current command unit (42) outputs a current command value ($i_T$*) within the first control region (A1) with respect to the electromagnet (27) for building the control model. Based on the current command value ($i_T$*) sent from the current command unit (42), the current controller (34) then controls the current of the coil (25) of the electromagnet (27-1) for building the control model. On the other hand, the first converter (32) outputs, to the second converter (33), the levitation electromagnetic force command value ($f_L$*) regarding the electromagnets (27-2) to (27-6), which are levitation electromagnets. This value allows the second converter (33) to generate the levitation current command value ($i_L$*) corresponding to the levitation electromagnets using the control model for the first control region (A1), which is stored in the controller (30), and to output the levitation current command value ($i_L$*) to the current controller (34).

Then, the current controller (34) outputs the voltage command value (V*) based on the levitation current command value ($i_L$*). As a result, a predetermined voltage (V) is applied to each of the coils (25), and the current (i) flows through each of the coils (25) of each of the electromagnets (27). By this, the drive shaft (13) is levitated at low load. Here, the phrase "at low load" refers to a state where the drive shaft (13) is supported by the magnetic bearing (20) in a region (in this example the first control region (A1)) the control model for which is already known.

Next, in step (S04), the electromagnetic force calculator (41) calculates the value of the current flowing through the coils (25) of the levitation electromagnets during levitation at low load. Moreover, the electromagnetic force calculator (41) memorizes the electromagnetic force required for levitation at low load.

In step (S05), the current command unit (42) sets the current command value ($i_T$*) with respect to the coil (25) of the electromagnet (27-1) for building the control model. More specifically, the current command unit (42) sets the current command value ($i_T$*) such that the intensity of the magnetic flux of the electromagnet (27-1) enters the second control region (A2).

Subsequently, in step (S06), current is allowed to flow through the electromagnet for building the control model and through the levitation electromagnets. Specifically, the current controller (42) sets the current value of the second control region (A2) as the current command value ($i_T$*). In the case where the electromagnet (27-1) for building the control model is not under the control of the controller (30), the electromagnetic force of the electromagnet (27-1) for building the control model may be considered a so-called disturbance. Thus, if the electromagnetic force of the electromagnet (27-1) for building the control model is considered a so-called disturbance, the supporting force command value ($F_{total}$*) output by the position controller (31) is the supporting force required to control the drive shaft (13) at a desired position. By this, the levitation current command value ($i_L$*) output by the second converter (33) is set such that an electromagnetic force (f1) of the electromagnet (27-1) for building the control model, and a resultant force (combined electromagnetic force of electromagnetic forces (f2) to (f6)) of the electromagnets (27-2) to (27-6), which are levitation electromagnets, are balanced.

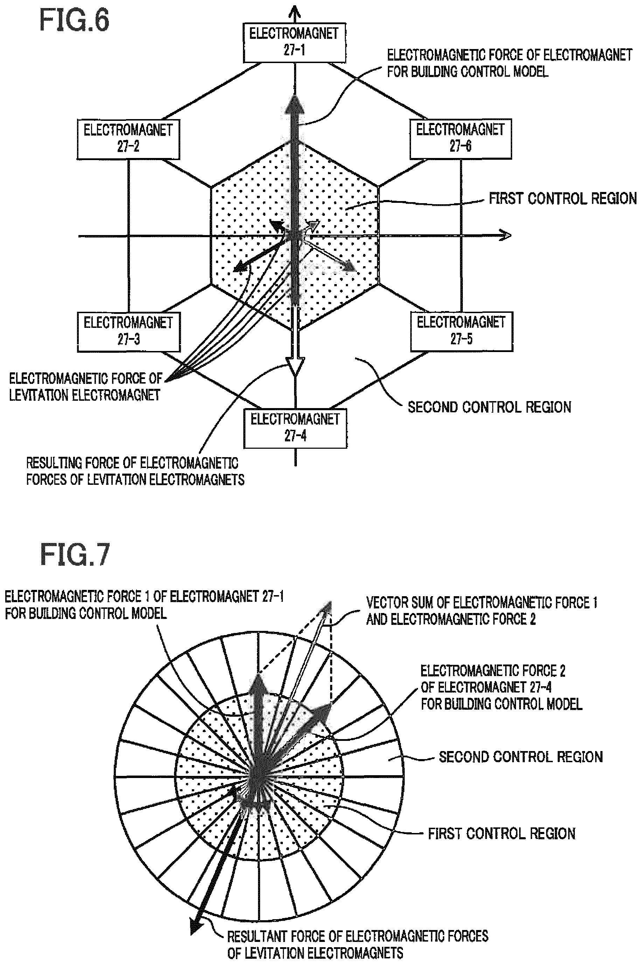

Then, based on the current command value ($i_T$*) sent from the current command unit (42), the current controller (34) controls the current of the coil (25) of the electromagnet (27-1) for building the control model. On the other hand, based on the levitation current command value ($i_L$*), the current controller (34) makes sure that a current controlled within the first control region (A1) flows through the coils (25) of the electromagnets (27-2) to (27-6), which are levitation electromagnets. By this, the drive shaft (13) is levitated at high load. FIG. 6 shows an example relationship between the electromagnetic forces of each of the electromagnets when the control model is built.

Next, in step (S07), the electromagnetic force of the levitation electromagnets (calculable based on the control model already known) is used as a basis to calculate the electromagnetic force of the electromagnet (27) for building the control model for the second control region (A2). Specifically, the electromagnetic force calculator (41) calculates an electromagnetic force (f1) of the electromagnet (27-1) for building the control model, based on a difference between the resultant electromagnetic force (see step (S06)) of the levitation electromagnets during levitation at high load and the resultant electromagnetic force (value memorized in step (S04)) during levitation at low load.

More specifically, the resultant force (combined electromagnetic force) of the electromagnets (27-2) to (27-6), which are levitation electromagnets, is calculated based on the control model for the first control region (A1). A value obtained by deducting the electromagnetic force of the levitation electromagnets at low load from this combined electromagnetic force is the electromagnetic force of the electromagnet (27-1) for building the control model for the second control region (A2). That is, in the present embodiment, the electromagnetic force in the case where the drive shaft (13) is levitated at low load is calculated in advance based on the control model for the first control region (A1).

In step (S08), regarding all current values required for building the control model, it is assessed whether or not the electromagnetic force of the electromagnet (27-1) for building the control model has been determined. In the case were the electromagnetic force regarding all current values required has been successfully determined, the process moves on to step (S09). If, however, the electromagnetic force regarding a different current value yet needs to be determined, the process returns to step (S05). In step (S05), a desired current command value ($i_T$*) is set, and the current of the electromagnet (27-1) for building the control model is altered.

In step (S09), regarding all gap widths (G) required for building the control model, it is assessed whether or not the electromagnetic force of the electromagnet (27-1) for building the control model has been determined. If a relationship between the current and the electromagnetic force has been established for all gap widths (G) required, the process moves on to step (S10). If that is not the case, the process returns to step (S02) and adjusts the rotor position command value (X*) such that the gap width (G) required is achieved.

In step (S10), the correlation calculator (45) determines a correlation curve of the current, gap width, and electromagnetic force regarding the electromagnet (27-1) for building the control model. The correlation calculator (45) stores the correlation curve in the controller (30) in form of, for example, a function or a table.

Then, in step (S11), it is assessed whether or not the control model for the second control region (A2) with respect to all of the electromagnets (27) has been built. If the control model for the second control region (A2) with respect to all of the electromagnets (27) has been built, the building of the control model is complete. If, however, there is an electromagnet (27) left with no control model built for the second control region (A2), the process returns to step (S01) and suitably selects an electromagnet (27) among the remaining electromagnets (27) as the electromagnet (27) for building the control model.

<Position Control in Magnetic Bearing>

In the magnetic bearing (20), the control model prepared in advance (control model already known) is stored in the controller (30) as control model for the first control region (A1). Further, building the control model allows for storing the control model for the second control region (A2).

After the magnetic bearing (20) has been activated, in the case where, for example, the levitation electromagnetic force command value ($f_L$*) generated by the first converter (32) falls within the first control region (A1), the second converter (33) generates the levitation current command value ($i_L$*) using the control model already known to control each of the electromagnets (27). Further, in the case where the levitation electromagnetic force command value ($f_L$*) generated by the first converter (32) falls within the second control region (A2), the second converter (33) generates the levitation current command value ($i_L$*) using the control model built by the control model building unit (40). This allows for controlling the position of the drive shaft (13) in both the first control region (A1) as well as the second control region (A2) - in other words, over an entire region where position control in the magnetic bearing (20) is desired.

<Advantages of Embodiment>

As can be seen from the above, the present embodiment allows for building control models for the electromagnets of the magnetic bearing (20) without using an electromagnetic force measuring device, which has a measuring range corresponding to the control range of the magnetic bearing. Therefore, costs required for such a device may be saved.

Moreover, in the present embodiment, there is no need to measure every single electromagnetic force occurring in an entire control region using a measuring device, which makes building the control models simple.

Further, since the calculation result of the electromagnetic force generated by the electromagnet (27) for building the control model is determined using the electromagnetic force at low load determined in advance, the electromagnetic force in a region where a model is built (the second control region (A2)) may be determined more accurately.

Also, since the magnetic bearing (20) of the present embodiment includes the control model building unit (40), position control may be performed accurately even if the electromagnetic force of the electromagnets (27) alters with time if, for example, the control model is built for a second time after a device including the magnetic bearing (22) has been installed.

Note that a control model for the second control region (A2) may be built based on only one of the electromagnets (27), and that this control model may be used as control model for the second control region (A2) common for all of the electromagnets (27).

«Variation of First Embodiment»

Note that, in addition to the levitation electromagnets, an already-known disturbance (e.g., gravity) may be used for building the control model.

Specifically, the first converter (32) generates the levitation electromagnetic force command value ($f_L$*) such that a resultant force of the levitation electromagnetic force ($f_L$) and a force of the already-known disturbance (hereinafter "disturbing force") becomes equivalent to the supporting force ($F_{total}$). Further, when calculating the electromagnetic force of the electromagnets (27) for building the control model for the first control region (A1), the electromagnetic force calculator (41) deducts the electromagnetic force required for the levitation electromagnets to levitate the drive shaft (13) and the disturbing force from the resultant electromagnetic force of the levitation electromagnets.

This allows for using the already-known disturbing force, such as gravity, in building the control model, and thus to build a control model regarding a current and gap width of a wider scope.

«Second Embodiment of Invention»

FIG. 7 shows electromagnetic force of a magnetic bearing (20) according to a second embodiment. In this example, the magnetic bearing includes 24 electromagnets (27). In the second control region (A2) the electromagnetic force is controlled using control models one provided for each of groups of electromagnets (hereinafter referred to as "electromagnet groups"), each of which includes two or more electromagnets (27) included in the magnetic bearing (20). In this example, two electromagnets (27) form one electromagnet group, and one control model corresponds to one electromagnet group.

As shown in FIG. 7, in the control model building (40) of the present embodiment, position control is performed such that a vector sum of an electromagnetic force 1 of an electromagnet (27-1), which is one of the electromagnets forming the electromagnet group for building the control model, and an electromagnetic force 2 of an electromagnet (27-4), which faces the electromagnet (27-1), is equal to a resultant electromagnetic force of electromagnetic forces of the levitation electromagnets. In this way, the vector sum of the electromagnetic force 1 and the electromagnetic force 2 is determined.

In this case, a current flows through each of the electromagnets (27-1) and (27-4) in the electromagnet group for building the control model such that their magnetic flux falls within the second control region (A2). Further, a current flows through the levitation electromagnets, such that a magnetic flux falls within the first control region (A1), Like in the first embodiment, the correlation calculator (45) builds a control model for each of the electromagnet groups.

Thanks to this configuration, the present embodiment may achieve the same advantages as the first embodiment.

Note that the number of electromagnets forming an electromagnet group is a mere example and not limited to two.

Moreover, a control model for the second control region (A2) may be built based on only one electromagnet and used as a control model for the second control region (A2) common for all electromagnets.

«Third Embodiment of Invention»

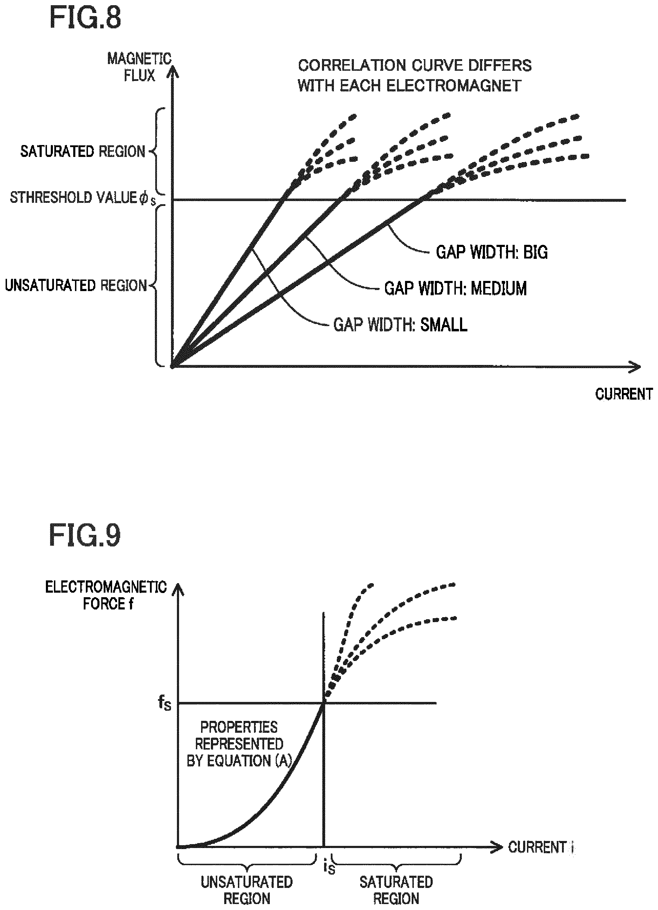

In a third embodiment, an example will be explained where a control model is built with a saturated region (described below) of the electromagnets (27) serving as the second control region (A2). FIG. 8 shows a correlation between a current of an electromagnet and an intensity of a magnetic flux. Generally, the magnetic flux in electromagnets monotonically increases with respect to the current and monotonically decreases with respect to the gap width. Specifically, if the electromagnet is small, the relationship between the current, the gap width and the magnetic flux is defined by equation (A) as follows:

$$\text{magnetic flux} = \alpha \times (\text{current/gap width}) \dots (A)$$

where $\alpha$ is a constant.

Further, disregarding the intensity of the magnetic flux, the relationship between the magnetic flux and the electromagnetic force in each of the electromagnets is defined by equation (B) as follows:

$$\text{electromagnetic force} = \beta \times (\text{magnetic flux})^2 \dots (B)$$

where $\beta$ is a constant.

If intensity of the magnetic flux does not surpass a threshold value ($\varphi_s$) determined by a shape of the electromagnet and physical properties of a material the electromagnet is made from, the relationship between the current, gap width and electromagnetic force in each of the electromagnets is defined by equation (C), based on equations (A) and (B), as follows:

$$\text{electromagnetic force} = k \times (\text{current/gap width})^2 \dots (C)$$

where k is a constant. Note that FIG. 5 shows the relationship between the current (i) and an electromagnetic force (f).

Since a variance of the constants $\alpha$, $\beta$ and k in equations (A), (B), and (C) between each of the electromagnets is small, an individual difference (variance) between the electromagnets regarding the relationship between the current, gap width, and electromagnetic force also is small.

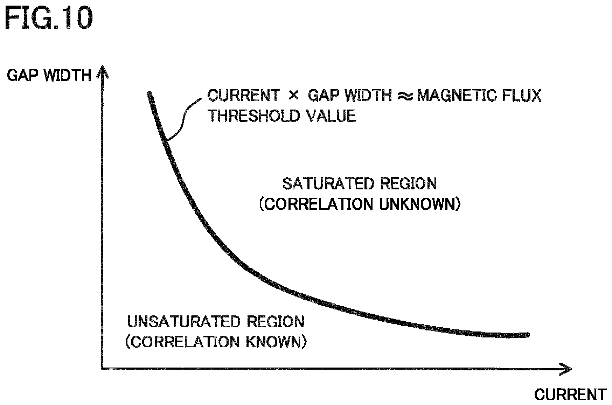

On the other hand, if the magnetic flux surpasses the threshold value ($\varphi_s$), the relationship (correlation curve) between the current, gap width, and electromagnetic force becomes a nonlinear relationship. Moreover, each of the electromagnets ends up having a different correlation curve (the individual difference increases). In the following, a range regarding the current, electromagnetic force, and gap width within which the magnetic flux does not surpass the threshold value ($\varphi_s$) is referred to as an unsaturated region, whereas a range regarding the current, electromagnetic force, and gap width within which the magnetic flux surpasses the threshold value ($\varphi_s$) is referred to as a saturated region. Note that FIG. 10 illustrates an example border between the saturated region and the unsaturated region with the current and the gap width as parameters.

In view of the abovementioned characteristics of electromagnets, the controller (30) of the present embodiment divides the control region in two regions in accordance with the individual difference between the electromagnets (27) regarding the relationship between the current flowing through the electromagnets (27), the gap width (G) between the stator (21) and the drive shaft (13), and the electromagnetic force generated by the electromagnets (27). A common control model is prepared in advanced, for example during a stage when the magnetic bearing (20) is designed and developed, and then (during construction or installation) integrated in advance into the controller (30). That is, in this embodiment, the unsaturated region is the first control region (A1).

Further, in the saturated region, which is the control region with the large individual difference (region with a larger individual difference than the unsaturated region), the electromagnetic force is controlled using control models provided one for each of the electromagnets (27). The control model for the unsaturated region is built by the control model building unit (40). In other words, in this embodiment, the saturated region is the second control region (A2).

<Advantages of Embodiment>

The present embodiment may achieve the same advantages as the first embodiment.

Furthermore, in the saturated region where a control model is built one for each of the electromagnets, more data regarding the electromagnetic force are necessary than for building the control model for the unsaturated region. Therefore, it requires excessive worktime to calculate the electromagnetic force of the saturated region using a measuring device. In the present embodiment, however, the control model building unit (40) allows to build the control model largely automatically. That is, rather than calculating the electromagnetic force of the saturated region using a measuring device, the present embodiment allows for building the control model in a more simple way.

Note that, like in the second embodiment, also in the present embodiment a control model for the saturated region (second control region (A2)) may be built for each of the electromagnet groups.

«Fourth Embodiment of Invention»

If, like in the first embodiment, the electromagnetic force of the electromagnets (levitation electromagnets) controlled within the first control region (A1) serves as a basis, the maximum electromagnetic force at which a model can be built is restricted by the resultant electromagnetic force of the electromagnetic forces occurring if the levitation electromagnets are operated within the first control region (A1).

If, however, the control model for the second control region (A2) is built like in the first embodiment, and if this control model for the second control region (A2) is then used, a range of electromagnetic force at which the model can be built - that is, a control range - may be further extended. Specifically, first, the levitation magnets are controlled within the second control region (A2) or the fist control region (A1) by the previously built control model for the second control region (A2) or the first control region (A1). At the same time, the electromagnets (27) for building the control model, which generate a magnetic flux, which is more intense than that falling within the second control region (A2), falling within a control region (here: third control region (A3)), are operated.

Then, the control model building unit (40) performs position control like in the first embodiment such that the electromagnetic force of the electromagnet (27) for building the control model and the resultant electromagnetic force including the electromagnetic forces of the levitation electromagnets are balanced by which the gap width (G) reaches a desired value, and determines the electromagnetic force of the electromagnets (27) for building the control model for the third control region (A3). If the electromagnetic force is determined in such a way for each of the electromagnets (27) or for each of the plurality of electromagnet groups regarding all current values and gap widths (G) required for building the model for the third control region (A3), a control model for an extended control region may be obtained.

Note that, like in the second embodiment, also in the present embodiment a control model for the third control region (A3) may be built for each of the electromagnet groups.

«Other Embodiments»

Note that instead of being installed in the magnetic bearing (20), the control model building unit (40) may be, for example, a part of a manufacturing apparatus (or a manufacturing line).

Further, the given number of electromagnets forming the magnetic bearing (20) is only an example.

Moreover, the scope of application of the magnetic bearing (20) is not limited to a turbo-compressor.

Furthermore, the correlation used for the control model is not limited to a combination of three parameters, namely the current (i) flowing through the electromagnets (27), the gap width (G), and the electromagnetic force. Examples of possible correlations include correlations between two or more parameters among the current (i) flowing through the electromagnets (27), the number of flux linkages ($\psi$) passing through the electromagnets (27), the gap width (G) between the stator (21) and the drive shaft (13), the magnetic energy (Wm) of the electromagnets (27), the magnetic co-energy (Wm') in the electromagnets (27), the electromagnetic force generated by the electromagnets (27), as well as a parameter derived using these parameters.

Among these correlating parameters, the number of flux linkages ($\psi$) may be determined based on a value obtained by temporally integrating the voltage resulting from deducting a voltage drop of the coil (25) from a voltage applied to the coil (25) of the electromagnet (27). Note that, in the case where the voltage drop of the coil (25) is lower than the voltage applied to the coil (25), the number of flux linkages ($\psi$) may be determined based on a value obtained by temporally integrating the voltage applied to the coil (25) of the electromagnet (27).

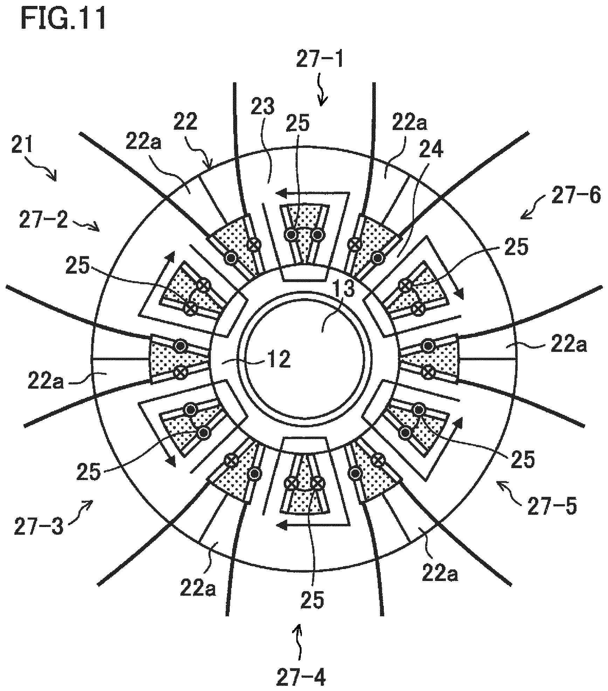

Moreover, the core (22) of the stator (21) may as well be formed by combining a plurality of blocks. FIG. 11 shows an example division of the core (22). In the example shown in FIG. 11, the core (22) includes six core blocks (22a) combined in the back yoke (23). In a structure divided this way, the variation characteristic to the electromagnets (27) is at risk to increase. However, performing the control according to each of the above embodiments allows for achieving a reliable position control. That is, the above-described control is useful when applied in the magnetic bearing (20) including a divided core (22).

INDUSTRIAL APPLICABILITY

The present invention is useful for a magnetic bearing supporting a drive shaft with no contact between the magnetic bearing and the drive shaft, and for a method to build a control model for the magnetic bearing.

DESCRIPTION OF REFERENCE CHARACTERS

13   Drive Shaft
20   Magnetic Bearing
21   Stator
27   Electromagnet
40   Control Model Building Unit
41   Electromagnetic Force Calculator (Calculator)

**Claims**

1. A magnetic bearing comprising:

    a stator (21) having a plurality of electromagnets (27) which apply electromagnetic force to a drive shaft (13);
    a calculator (41) determining, based on a control model for a first control region (A1), a value of a dependent variable of the electromagnets (27) controlled within the first control region (A1), and calculating a value of a dependent variable of the electromagnets (27) controlled within a second control region (A2), in a state where position control of the drive shaft (13) is performed by controlling part of the electromagnets (27) based on the control model for the first control region (A1), which is a control model built in advance for determining, based on a correlation between two or more parameters among a current (i) flowing through the electromagnets (27), the number of flux linkages ($\psi$) passing through the electromagnets (27), a gap width (G) between the stator (21) and the drive shaft (13), magnetic energy (Wm) of the electromagnets (27), magnetic co-energy (Wm') in the electromagnets (27), electromagnetic force generated by the electromagnets (27), and a parameter calculated based on these parameters, a value of a dependent variable related to the correlation, and by controlling, within the second control region (A2), one or a group of the electromagnets (27) other than the electromagnets (27) controlled within the first control region (A1); and
    a control model building unit (40) building the control model used for the second control region (A2) based on the value calculated by the calculator (41).

2. The magnetic bearing of claim 1, wherein
    the correlation is a correlation between the current (i) flowing through the electromagnets (27), the gap width (G), and the electromagnetic force, and
    the calculator (41) determines, based on the control model for the first control region (A1), a resultant force including electromagnetic forces generated by the electromagnets (27) controlled within the first control region (A1), and calculates, based on the resultant force, the electromagnetic force of the electromagnets (27) controlled within the second control region (A2), in a state where the position control of the drive shaft (13) is performed by controlling part of the electromagnets (27) based on the control model for the first control region (A1), which is a control model built in advance based on the current (i) flowing through the electromagnets (27), the gap width (G), and the electromagnetic force, and by controlling, within the second control region (A2), one or a group of electromagnets (27) other than the electromagnets (27) controlled within the first control region (A1).

3. The magnetic bearing of claim 2, wherein:
    the calculator (41) determines in advance an electromagnetic force based on the control model of the first control region (A1) in a case where the drive shaft (13) is levitated at low load, using only the electromagnets (27) controlled in the first control region (A1), and then determines a difference between the electromagnetic force previously calculated and the resultant electromagnetic force as an electromagnetic force generated by the electromagnets (27) controlled in the second control region (A2).

4. The magnetic bearing of claim 2 or 3, wherein,
    the calculator (41) determines, based on the control model for the second control region (A2), the electromagnetic force of the electromagnets (27) controlled within the second control region (A2), and calculates, based on the electromagnetic force determined, an electromagnetic force of the electromagnets (27) controlled within a third control region (A3), in which electromagnetic force is stronger than in the second control region (A2), in a state where the position control is performed by controlling part of the electromagnets (27) in the third control region (A3), and predetermined other part of the electromagnets (27) within the second control region (A2), and
the control model building unit (40) builds a control model used for the third control region (A3) based on calculation results for the electromagnetic force of the electromagnets (27) controlled within the third control region (A3).

5. The magnetic bearing of claim 1, wherein
the correlation is a correlation between the number of flux linkages ($\psi$), the gap width (G), and the electromagnetic force, and
the calculator (41) determines, based on the control model for the first control region (A1), the resultant force including the electromagnetic forces of the electromagnets (27) controlled within the first control region (A1), and calculates, based on this resultant force, an electromagnetic force of the electromagnets (27) controlled within the second control region (A2), in a state where the position control of the drive shaft (13) is performed by controlling part of the electromagnets (27) based on the control model for the first control region (A1), which is a control model build in advance based on the number of flux linkages ($\psi$), the gap width (G), and the electromagnetic force, and by controlling, within the second control region (A2), one or a group of electromagnets (27) other than the electromagnets (27) controlled within the first control region (A1).

6. The magnetic bearing of claim 5, wherein
the calculator (41) determines the number of flux linkages ($\psi$) based on a value obtained by temporally integrating a voltage applied to the coil (25) of the electromagnets (27).

7. The magnetic bearing of claim 5, wherein
the calculator (41) determines the number of flux linkages ($\psi$) based on a value obtained by temporally integrating a voltage resulting from deducting a voltage drop of the coil (25) from a voltage applied to the coil (25) of the electromagnets (27).

8. The magnetic bearing of any one of claims 1 to 7, wherein
a core (22), which is the stator (21), is formed by combining a plurality of core blocks (22a).

9. A control model building method for a magnetic bearing including a plurality of electromagnets (27) and performing position control of a drive shaft (13), the control model building method comprising:

preparing a control model for determining a value of a dependent variable based on a correlation between two or more parameters among a current (i) flowing through the electromagnets (27), the number of flux linkages ($\psi$) passing through the electromagnets (27), a gap width (G) between a stator (21) and a drive shaft (13), magnetic energy (Wm) of the electromagnets (27), magnetic co-energy (Wm') in the electromagnets (27), electromagnetic force generated by the electromagnets (27), and a parameter calculated based on these parameters, the dependent variable being related to the correlation,
performing the position control by operating part of the electromagnets (27) within a second control region (A2), a control model for which yet needs to be built, and by controlling other predetermined part of the electromagnets (27) within a first control region (A1), in a first determining step determining a value of a dependent variable regarding the electromagnets (27) controlled within the first control region (A1) based on a control model for the first control region (A1),
in a second determining step determining a value of a dependent variable regarding the electromagnets (27) operated within the second control region (A2) based on the value of the dependent variable determined in the first determining step, and
building a control model used for the second control region (A2) based on the value of the dependent variable determined in the second determining step.

**Patentansprüche**

1. Magnetlager, umfassend:

einen Stator (21) mit einer Vielzahl von Elektromagneten (27), die eine elektromagnetische Kraft auf eine Antriebswelle (13) ausüben;

eine Recheneinrichtung (41) zur Bestimmung, basierend auf einem Steuermodell für einen ersten Steuerbereich (A1), eines Werts einer abhängigen Variablen der in dem ersten Steuerbereich (A1) gesteuerten Elektromagnete (27) und Berechnung eines Werts einer abhängigen Variablen der in einem zweiten Steuerbereich (A2) gesteuerten Elektromagnete (27) in einem Zustand, in dem eine Positionssteuerung der Antriebswelle (13) durchgeführt wird durch Steuern eines Teils der Elektromagnete (27) basierend auf dem Steuermodell für den ersten Steuerbereich (A1), das ein im Voraus zur Bestimmung aufgestelltes Steuermodell ist, basierend auf einer Korrelation zwischen zwei oder mehr Parametern von einem Strom (i), der durch die Elektromagnete (27) fließt, der Anzahl von Flussverkettungen (Ψ), die durch die Elektromagnete (27) treten, einer Spaltbreite (G) zwischen dem Stator (21) und der Antriebswelle (13), magnetischer Energie (Wm) der Elektromagnete (27), magnetischer Co-Energie (Wm') in den Elektromagneten (27), von den Elektromagneten (27) erzeugter elektromagnetischer Kraft und einem basierend auf diesen Parametern berechneten Parameter, eines Werts einer mit der Korrelation in Beziehung stehenden abhängigen Variablen, und durch Steuern, in dem zweiten Steuerbereich (A2), eines oder einer Gruppe der Elektromagnete (27) mit Ausnahme der in dem ersten Steuerbereich (A1) gesteuerten Elektromagnete (27); und

eine Steuermodellbildeeinheit (40) zum Bilden des für den zweiten Steuerbereich (A2) verwendeten Steuermodells basierend auf dem von der Recheneinrichtung (41) berechneten Wert.

2. Magnetlager nach Anspruch 1, wobei

die Korrelation eine Korrelation zwischen dem Strom (i), der durch die Elektromagnete (27) fließt, der Spaltbreite (G) und der elektromagnetischen Kraft ist, und

die Recheneinrichtung (41), basierend auf dem Steuermodell für den ersten Steuerbereich (A1), eine resultierende Kraft bestimmt, die von den in dem ersten Steuerbereich (A1) gesteuerten Elektromagneten (27) erzeugten elektromagnetischen Kräfte enthält, und, basierend auf der resultierenden Kraft, die elektromagnetische Kraft der in dem zweiten Steuerbereich (A2) gesteuerten Elektromagnete (27) berechnet, in einem Zustand, in dem die Positionssteuerung der Antriebswelle (13) durch Steuern eines Teils der Elektromagnete (27) basierend auf dem Steuermodell für den ersten Steuerbereich (A1), das ein Steuermodell ist, das im Voraus basierend auf dem Strom (i), der durch die Elektromagnete (27) fließt, der Spaltbreite (G) und der elektromagnetischen Kraft gebildet ist, und durch Steuern, in dem zweiten Steuerbereich (A2), eines oder einer Gruppe von Elektromagneten (27) mit Ausnahme der in dem ersten Steuerbereich (A1) gesteuerten Elektromagnete (27) durchgeführt wird.

3. Magnetlager nach Anspruch 2, wobei:

die Recheneinrichtung (41) im Voraus eine elektromagnetische Kraft basierend auf dem Steuermodell des ersten Steuerbereichs (A1) in einem Fall, in dem die Antriebswelle (13) mit geringer Last angehoben ist, unter Verwendung nur der in dem ersten Steuerbereich (A1) gesteuerten Elektromagnete (27) bestimmt und dann eine Differenz zwischen der vorher berechneten elektromagnetischen Kraft und der resultierenden elektromagnetischen Kraft als eine von den in dem zweiten Steuerbereich (A2) gesteuerten Elektromagneten (27) erzeugte elektromagnetische Kraft bestimmt.

4. Magnetlager nach Anspruch 2 oder 3, wobei

die Recheneinrichtung (41), basierend auf dem Steuermodell für den zweiten Steuerbereich (A2), die elektromagnetische Kraft der in dem zweiten Steuerbereich (A2) gesteuerten Elektromagnete (27) bestimmt und basierend auf der bestimmten elektromagnetischen Kraft eine elektromagnetische Kraft der in einem dritten Steuerbereich (A₃) gesteuerten Elektromagnete (27) berechnet, in dem eine elektromagnetische Kraft stärker als in dem zweiten Steuerbereich (A2) ist, in einem Zustand, in dem die Positionssteuerung durch Steuern eines Teils der Elektromagnete (27) in dem dritten Steuerbereich (A₃) und eines vorab festgelegten anderen Teils der Elektromagnete (27) in dem zweiten Steuerbereich (A2) durchgeführt wird, und

die Steuermodellbildeeinheit (40) ein für den dritten Steuerbereich (A3) verwendetes Steuermodell basierend auf Berechnungsergebnissen für die elektromagnetische Kraft der in dem dritten Steuerbereich (A3) gesteuerten Elektromagnete (27) bildet.

5. Magnetlager nach Anspruch 1, wobei

die Korrelation eine Korrelation zwischen der Anzahl von Flussverkettungen (Ψ), der Spaltbreite (G) und der elektromagnetischen Kraft ist, und

die Recheneinrichtung (41), basierend auf dem Steuermodell für den ersten Steuerbereich (A1), die resultierende Kraft bestimmt, die die elektromagnetischen Kräfte der in dem ersten Steuerbereich (A1) gesteuerten Elektromagnete (27) enthält, und basierend auf dieser resultierenden Kraft eine elektromagnetische Kraft der in dem zweiten Steuerbereich (A2) gesteuerten Elektromagnete (27) berechnet, in einem Zustand, in dem die Positionssteuerung der Antriebswelle (13) durch Steuern eines Teils der Elektromagnete (27) basierend auf dem Steuermodell für den ersten Steuerbereich (A1), das ein Steuermodell ist, das im Voraus basierend auf der Anzahl von Flussverkettungen ($\Psi$), der Spaltbreite (G) und der elektromagnetischen Kraft gebildet ist, und durch Steuern, innerhalb des zweiten Steuerbereiches (A2), von einem oder einer Gruppe von Elektromagneten (27) mit Ausnahme der in dem ersten Steuerbereich (A1) gesteuerten Elektromagnete (27) durchführt.

6. Magnetlager nach Anspruch 5, wobei
die Recheneinrichtung (41) die Anzahl von Flussverkettungen ($\Psi$) basierend auf einem Wert bestimmt, der durch zeitliche Integration einer an die Spule (25) der Elektromagnete (27) angelegten Spannung erhalten ist.

7. Magnetlager nach Anspruch 5, wobei
die Recheneinrichtung (41) die Anzahl von Flussverkettungen ($\Psi$) basierend auf einem Wert bestimmt, der durch zeitliche Integration einer Spannung erhalten ist, die aus Abziehen eines Spannungsabfalls der Spule (25) von einer an die Spule (25) der Elektromagnete (27) angelegten Spannung resultiert.

8. Magnetlager nach einem der Ansprüche 1 bis 7, wobei
ein Kern (22), der der Stator (21) ist, durch Kombinieren einer Vielzahl von Kernblöcken (22a) gebildet ist.

9. Verfahren zur Bildung eines Steuermodells für ein Magnetlager, das eine Vielzahl von Elektromagneten (27) enthält, und zur Durchführung einer Positionssteuerung einer Antriebswelle (13), wobei das Verfahren zur Bildung eines Steuermodells umfasst:

Präparieren eines Steuermodells zur Bestimmung eines Werts einer abhängigen Variablen basierend auf einer Korrelation zwischen zwei oder mehr Parametern von einem Strom (i), der durch die Elektromagnete (27) fließt, der Anzahl von Flussverkettungen ($\Psi$), die durch die Elektromagnete (27) treten, einer Spaltbreite (G) zwischen einem Stator (21) und einer Antriebswelle (13), magnetischer Energie (Wm) der Elektromagnete (27), magnetischer Co-Energie (Wm') in den Elektromagneten (27), von den Elektromagneten (27) erzeugter elektromagnetischer Kraft, und einem basierend auf diesen Parametern berechneten Parameter, wobei die abhängige Variable mit der Korrelation in Beziehung steht,
Durchführen der Positionssteuerung durch Betreiben eines Teils der Elektromagnete (27) in einem zweiten Steuerbereich (A2), für den ein Steuermodell noch gebildet werden muss, und durch Steuern eines anderen vorab festgelegten Teils der Elektromagnete (27) in einem ersten Steuerbereich (A1),
in einem ersten Bestimmungsschritt, Bestimmen eines Werts einer abhängigen Variablen bezüglich der in dem ersten Steuerbereich (A1) gesteuerten Elektromagnete (27) basierend auf einem Steuermodell für den ersten Steuerbereich (A1),
in einem zweiten Bestimmungsschritt, Bestimmen eines Werts einer abhängigen Variablen bezüglich der in dem zweiten Steuerbereich (A2) betriebenen Elektromagnete (27), basierend auf dem Wert der abhängigen Variablen, der in dem ersten Bestimmungsschritt bestimmt ist, und
Bilden eines für den zweiten Steuerbereich (A2) verwendeten Steuermodells basierend auf dem Wert der abhängigen Variablen, der in dem zweiten Bestimmungsschritt bestimmt ist.

**Revendications**

1. Palier magnétique, comprenant :

un stator (21) possédant une pluralité d'électroaimants (27) appliquant une force électromagnétique sur un arbre d'entraînement (13) ;
un calculateur (41) déterminant, sur la base d'un modèle de contrôle pour une première zone de contrôle (A1), une valeur d'une variable dépendante des électroaimants (27) contrôlés au sein de la première zone de contrôle (A1), et calculant une valeur d'une variable dépendante des électroaimants (27) contrôlés au sein d'une deuxième zone de contrôle (A2), dans un état dans lequel le contrôle de la position de l'arbre d'entraînement (13) s'effectue en contrôlant une partie des électroaimants (27) sur la base du modèle de contrôle pour la première zone de contrôle (A1), qui est un modèle de contrôle construit au préalable pour déterminer, d'après une corrélation entre deux ou plusieurs paramètres parmi un courant (i) s'écoulant à travers les électroaimants (27), le nombre de liaisons de flux ($\Psi$) passant à travers les électroaimants (27), une largeur d'écart (G) entre le stator (21) et l'arbre d'entraînement (13), une énergie magnétique (Wm) des électroaimants (27), une co-énergie magnétique (Wm') dans les électroaimants (27), une force électromagnétique générée par les électroaimants (27), et un paramètre calculé d'après ces paramètres, une valeur d'une variable tributaire relative à la corrélation, et en contrôlant, au sein de la deuxième zone de contrôle (A2), un ou un groupe d'électroaimants (27) autres que les électroaimants (27) contrôlés au sein de la première zone de contrôle (A1) ; et
un dispositif de modélisation (40) construisant le modèle de contrôle utilisé pour la deuxième zone de contrôle (A2) d'après la valeur calculée par le calculateur (41).

2. Palier magnétique selon la revendication 1, dans lequel
la corrélation est une corrélation entre le courant (i) s'écoulant à travers les électroaimants (27), la largeur d'écart (G), et la force électromagnétique, et
le calculateur (41) déterminant, sur la base du modèle de contrôle pour la première zone de contrôle (A1), une force résultante comprenant des forces électromagnétiques générées par les électroaimants (27) contrôlés au sein de la première zone de contrôle (A1), et calculant, d'après la force résultante, la force électromagnétique des électroaimants (27) contrôlés au sein d'une deuxième zone de contrôle (A2), dans un état où le contrôle de position de l'arbre d'entraînement (13) s'effectue en contrôlant une partie des électroaimants (27) d'après le modèle de contrôle pour la première zone de contrôle (A1), qui est un modèle de contrôle construit au préalable d'après le courant (i) s'écoulant à travers les électroaimants (27), la largeur d'écart (G), et la force électromagnétique, et en contrôlant, au sein de la deuxième zone de contrôle (A2), un ou un groupe d'électroaimants (27) autres que les électroaimants (27) contrôlés au sein de la première zone de contrôle (A1).

3. Palier magnétique selon la revendication 2, dans lequel
le calculateur (41) détermine au préalable une force électromagnétique d'après le modèle de contrôle de la première zone de contrôle (A1) dans un cas où l'arbre d'entraînement (13) est en lévitation sous faible charge, en utilisant seulement les électroaimants (27) contrôlés dans la première zone de contrôle (A1), et détermine ensuite une différence entre la force électromagnétique calculée précédemment et la force électromagnétique résultante en tant que force électromagnétique générée par les électroaimants (27) contrôlés dans la deuxième zone de contrôle (A2).

4. Palier magnétique selon la revendication 2 ou 3, dans lequel
le calculateur (41) détermine, d'après le modèle de contrôle pour la deuxième zone de contrôle (A2), la force électromagnétique des électroaimants (27) contrôlés au sein de la deuxième zone de contrôle (A2), et calcule, d'après la force électromagnétique déterminée, une force électromagnétique des électroaimants (27) contrôlés au sein d'une troisième zone de contrôle (A3), dans laquelle la force électromagnétique est plus élevée que dans la deuxième zone de contrôle (A2), dans un état où le contrôle de position s'effectue en contrôlant une partie des électroaimants (27) dans la troisième zone de contrôle (A3), et prédéterminant une autre partie des électroaimants (27) au sein de la deuxième zone de contrôle (A2), et
le dispositif de modélisation (40) construit un modèle de contrôle utilisé pour la troisième zone de contrôle (A3) d'après les résultats du calcul de la force électromagnétique des électroaimants (27) contrôlés au sein de la troisième zone de contrôle (A3).

5. Palier magnétique selon la revendication 1, dans lequel
la corrélation est une corrélation entre le nombre de liaisons de flux ($\Psi$), la largeur d'écart (G), et la force électromagnétique, et
le calculateur (41) détermine, sur la base du modèle de contrôle pour la première zone de contrôle (A1), la force résultante comprenant les forces électromagnétiques des électroaimants (27) contrôlés au sein de la première zone de contrôle (A1), et calcule, d'après cette force résultante, une force électromagnétique des électroaimants (27) contrôlés au sein de la deuxième zone de contrôle (A2), dans un état où le contrôle de position de l'arbre d'entraînement (13) s'effectue en contrôlant une partie des électroaimants (27) d'après le modèle de contrôle pour la première zone de contrôle (A1), qui est un modèle de contrôle construit au préalable en fonction du nombre de liaisons de flux ($\Psi$), de la largeur d'écart (G), et de la force électromagnétique, et en contrôlant, au sein de la deuxième zone de contrôle (A2), un ou un groupe d'électroaimants (27) autres que les électroaimants (27) contrôlés au sein de la première zone de contrôle (A1).

6. Palier magnétique selon la revendication 5, dans lequel
le calculateur (41) détermine le nombre de liaisons de flux ($\Psi$) d'après une valeur obtenue en intégrant provisoirement une tension appliquée sur la bobine (25) des électroaimants (27).

7. Palier magnétique selon la revendication 5, dans lequel
le calculateur (41) détermine le nombre de liaisons de flux ($\Psi$) d'après une valeur obtenue en intégrant provisoirement une tension résultant de la déduction d'une baisse de tension de la bobine (25) de la tension appliquée sur la bobine (25) des électroaimants (27).

8. Palier magnétique selon une quelconque des revendications 1 à 7, dans lequel
un noyau (22), qui est le stator (21), est formé en combinant une pluralité de blocs de noyau (22a).

9. Méthode de construction d'un modèle de contrôle pour un palier magnétique comprenant une pluralité d'électroaimants (27), et effectuant un contrôle de position d'un arbre d'entraînement (13), la méthode de construction d'un modèle de contrôle comprenant :

la préparation d'un modèle de contrôle pour déterminer une valeur d'une variable dépendante basée sur une corrélation entre deux ou plusieurs paramètres parmi un courant (i) s'écoulant à travers les électroaimants (27), le nombre de liaisons de flux ($\Psi$) passant à travers les électroaimants (27), une largeur d'écart (G) entre un stator (21) et un arbre d'entraînement (13), une énergie magnétique (Wm) des électroaimants (27), une co-énergie magnétique (Wm') dans les électroaimants (27), une force électromagnétique générée par les électroaimants (27), et un paramètre calculé d'après ces paramètres, la variable tributaire étant relative à la corrélation,
l'exécution d'un contrôle de position en actionnant une partie des électroaimants (27) dans une deuxième zone de contrôle (A2), pour lequel un modèle de contrôle est encore à construire, et en contrôlant d'autres parties prédéterminées des électroaimants (27) au sein d'une première zone de contrôle (A1),
dans une première étape de détermination déterminant une valeur d'une variable dépendante relative aux électroaimants (27) contrôlés au sein de la première zone de contrôle (A1) basée sur un modèle de contrôle pour la première zone de contrôle (A1),
dans une deuxième étape de détermination déterminant une valeur d'une variable dépendante relative aux électroaimants (27) utilisés au sein de la deuxième zone de contrôle (A2) d'après la valeur de la variable dépendante déterminée dans la première étape de détermination, et
la construction d'un modèle de contrôle pour la deuxième zone de contrôle (A2) basé sur la valeur de la variable dépendante déterminée dans la deuxième étape de détermination.

# FIG.1

FIG.2

FIG.3

## FIG.4

CONTROL MODEL BUILDING UNIT — 40, 41, 45

(CURRENT – GAP WIDTH – ELECTROMAGNETIC FORCE) CORRELATION CALCULATOR — 45

ELECTROMAGNETIC FORCE CALCULATOR — 41

SELECTOR — 43

CURRENT COMMAND UNIT — 42

CURRENT COMMAND VALUE $i_T^*$

T CORRECTED ELECTROMAGNET NUMBER

CONTROLLER — 30

ROTOR POSITION COMMAND VALUE $X^*$

ROTOR POSITION COMMAND UNIT — 35

SUPPORTING FORCE COMMAND VALUE $F_{total}^*$

LEVITATION ELECTROMAGNETIC FORCE COMMAND VALUE $f_L^*$

LEVITATION CURRENT COMMAND VALUE $i_L^*$

POSITION CONTROLLER — 31

FIRST CONVERTER — 32

SECOND CONVERTER — 33

COIL CURRENT COMMAND VALUE $i^*$

CURRENT CONTROLLER — 34

VOLTAGE COMMAND VALUE $V^*$

POWER SUPPLY UNIT — 50

VOLTAGE V

COIL — 25

COIL CURRENT i

MAGNETIC BEARING ELECTROMAGNET

ELECTROMAGNETIC FORCE f

COMBINATION OF FORCES

SUPPORTING FORCE $F_{total}$

KINETIC SYSTEM OF ROTOR (DRIVE SHAFT) — 26

ROTOR POSITION X

## FIG.5

START

S01 — SELECT ELECTROMAGNET FOR BUILDING MODEL

S02 — SET ROTOR POSITION COMMAND VALUE

S03 — CONTROL LEVITATION BY CURRENT WITHIN FIRST CONTROL REGION (LOW LOAD LEVITATION)

S04 — REGISTER ELECTROMAGNETIC FORCE DURING LOW LOAD LEVITATION

S05 — SET CURRENT COMMAND VALUE iT* OF ELECTROMAGNET FOR BUILDING CONTROL MODEL

S06 — CONTROL LEVITATION BY LEVITATION ELECTROMAGNET UNDER APPLICATION OF CURRENT WITHIN SECOND CONTROL REGION TO ELECTROMAGNET FOR BUILDING MODEL(LEVITATION AT HIGH LOAD)

S07 — CALCULATE ELECTROMAGNETIC FORCE OF ELECTROMAGNET FOR BUILDING CONTROL MODEL BASED ON DIFFERENCE BETWEEN LEVITATION ELECTROMAGNETIC FORCE DURING LEVITATION AT LOW LOAD AND LEVITATION ELECTROMAGNETIC FORCE DURING LEVITATION AT HIGH LOAD

S08 — REQUIRED CURRENT VALUE SET? — NO

YES

S09 — REQUIRED ROTOR POSITION SET? — NO

YES

S10 — CURRENT- GAP WIDTH - ELECTROMAGNETIC FORCE CALCULATE CORRELATION

S11 — REQUIRED ELECTROMAGNET SELECTED? — NO

YES

END

EP 3 168 488 B1

# FIG.6

ELECTROMAGNET 27-1

ELECTROMAGNETIC FORCE OF ELECTROMAGNET FOR BUILDING CONTROL MODEL

ELECTROMAGNET 27-2

ELECTROMAGNET 27-6

FIRST CONTROL REGION

ELECTROMAGNET 27-3

ELECTROMAGNET 27-5

ELECTROMAGNETIC FORCE OF LEVITATION ELECTROMAGNET

SECOND CONTROL REGION

ELECTROMAGNET 27-4

RESULTING FORCE OF ELECTROMAGNETIC FORCES OF LEVITATION ELECTROMAGNETS

# FIG.7

ELECTROMAGNETIC FORCE 1 OF ELECTROMAGNET 27-1 FOR BUILDING CONTROL MODEL

VECTOR SUM OF ELECTROMAGNETIC FORCE 1 AND ELECTROMAGNETIC FORCE 2

ELECTROMAGNETIC FORCE 2 OF ELECTROMAGNET 27-4 FOR BUILDING CONTROL MODEL

SECOND CONTROL REGION

FIRST CONTROL REGION

RESULTANT FORCE OF ELECTROMAGNETIC FORCES OF LEVITATION ELECTROMAGNETS

# FIG.8

MAGNETIC FLUX

CORRELATION CURVE DIFFERS WITH EACH ELECTROMAGNET

SATURATED REGION

STHRESHOLD VALUE $\phi_s$

UNSATURATED REGION

GAP WIDTH: BIG

GAP WIDTH: MEDIUM

GAP WIDTH: SMALL

CURRENT

# FIG.9

ELECTROMAGNETIC FORCE f

$f_s$

PROPERTIES REPRESENTED BY EQUATION (A)

CURRENT i

$i_s$

UNSATURATED REGION

SATURATED REGION

# FIG.10

GAP WIDTH

CURRENT × GAP WIDTH ≈ MAGNETIC FLUX
THRESHOLD VALUE

SATURATED REGION
(CORRELATION UNKNOWN)

UNSATURATED REGION
(CORRELATION KNOWN)

CURRENT

FIG.11

**EP 3 168 488 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10501326 B
- JP 2013068309 A